# EUROPÄISCHE PATENTSCHRIFT

(11) **EP 0 888 857 B1**
(45) Veröffentlichungstag und Bekanntmachung des Hinweises auf die Patenterteilung: **19.09.2001**
(21) Anmeldenummer: 97110965.7
(22) Anmeldetag: 02.07.1997
(51) Int. Cl.: B29C 31/02, B29C 45/18, B29C 47/10

(54) **Vorrichtung zum Zuführen von Rohmaterial in eine Plastifiziereinrichtung**
Device for feeding raw material in a plasticizer
Dispositif pour l'alimentation de matière première dans une installation de plastification

(43) Veröffentlichungstag der Anmeldung: 07.01.1999
(73) Patentinhaber: Mann + Hummel ProTec GmbH, 71636 Ludwigsburg (DE)
(72) Erfinder: Vollmar, Hartmut, 53639 Königswinter (DE)
(74) Vertreter: Müller-Gerbes, Margot, Dipl.-Ing.

(56) Entgegenhaltungen:
- EP-A- 0 335 298
- EP-A- 0 349 799
- DE-C- 3 529 523
- FR-A- 2 531 000
- GB-A- 1 360 494
- PATENT ABSTRACTS OF JAPAN vol. 008, no. 112 (M-298), 25.Mai 1984 & JP 59 022711 A (SUMITOMO JUKIKAI KOGYO KK), 6.Februar 1984,

## Beschreibung

Die Erfindung betrifft eine Vorrichtung zum Zuführen von Rohmaterial in eine Plastifiziereinrichtung mit einer in einem Gehäuse mit Einfüllöffnung drehbar antreibbaren Schnecke von Spritzgieß- oder Extrusionsmaschinen, umfassend eine auf dem Gehäuse befestigte und der Einfüllöffnung zugeordnete Trichterführung für mindestens einen Einfülltrichter mit Austrittsöffnung für das Rohmaterial, wobei der mindestens eine Einfülltrichter in eine mit der Einfüllöffnung des Gehäuses korrespondierende Position und eine hiervon entfernte Position bewegbar ist.

Eine gattungsgemäße Vorrichtung zum Zuführen von Rohmaterial, bei der zwei Einfülltrichter auf Schienen oberhalb einer Extrusionsmaschine bewegbar geführt sind, ist aus der US 4876 043 bekannt. Hierbei werden die Einfülltrichter zu Reinigungszwecken von der Einfüllöffnung weggeschoben, wobei die Einfüllöffnung der Extrusionsmaschine frei zugänglich wird. Nachteilig hierbei ist, daß der Betrieb der Extrusionsmaschine bei offener Einfüllöffnung und der darunter befindlichen drehenden Schnecke ermöglicht ist. Dies bedeutet eine erhebliche Unfall- und Verletzungsgefahr beispielsweise für eine mit Reinigungsarbeiten betraute Person, die während des Betriebs der Extrusionsmaschine in die offen zugängliche Einfüllöffnung hineingreift und dort leicht von der sich drehenden Schnecke erfaßt werden kann. Darüber hinaus geht von der offen zugänglichen Einfüllöffnung auch eine Gefahr für die Extrusionsmaschine aus, da dann kein Materialnachschub in die Einfüllöffnung mehr gewährleistet ist und die Extrusionsmaschine nach kurzer Zeit trockenläuft, was zu Produktionsunterbrechungen und gegebenenfalls auch zur Beschädigung der Extrusionsmaschine führt.

Aufgabe der Erfindung ist daher, die bekannten Vorrichtungen zum Zuführen von Rohmaterial dahingehend zu verbessern, daß eine Gefährdung von Personen und auch der Plastifiziereinrichtung infolge des Verschiebens von Einfülltrichtern ausgeschlossen wird.

Diese Aufgabe wird erfindungsgemäß mit einer Vorrichtung gemäß den kennzeichnenden Merkmalen des Patentanspruches 1 gelöst.

Vorteilhafte Ausgestaltungen der Erfindung sind den Unteransprüchen entnehmbar.

Zur Lösung der gestellten Aufgabe schlägt die Erfindung vor, daß mindestens ein Signalgeber zur Bestimmung der Position des Einfülltrichters in bezug auf die Einfüllöffnung des Gehäuses vorgesehen ist und der Antrieb der Schnecke der Plastifiziereinrichtung mittels eines von dem Signalgeber in Abhängigkeit von der Position des Einfülltrichters abgegebenen Signals an- bzw. abschaltbar ist.

Erfindungsgemäß wird der Antrieb der Plastifiziereinrichtung über Signalgeber an die Position des Einfülltrichters zwangsgekoppelt, d.h. es erfolgt eine Steuerung des Antriebes der Plastifiziereinrichtung dahingehend, daß der Betrieb nur dann ermöglicht ist, wenn sich über der Einfüllöffnung ein Einfülltrichter in einer solchen Position befindet, in der weder für Bedienpersonal noch für die Plastifiziereinrichtung selbst Gefahren auf Grund der sich drehenden Schnecke bestehen.

Gemäß einer vorteilhaften Ausgestaltung der Erfindung wird vorgeschlagen, daß die Trichterführung für den mindestens einen Einfülltrichter als Gleitführung mit einer zu der Einfüllöffnung des Gehäuses korrespondierenden Durchgangsöffnung ausgebildet ist und der Einfülltrichter in der Gleitführung verschiebbar geführt ist. Die Position des Einfülltrichters über der Durchgangsöffnung der Gleitführung ist mittels des dieser Position zugeordneten Signalgebers erkennbar und erfaßbar. Sobald der Signalgeber durch Abgabe eines entsprechenden Signals signalisiert, daß sich der Einfülltrichter über der Durchgangsöffnung der Gleitführung befindet, d.h. in der Betriebsstellung, kann der Betrieb der Plastifiziereinrichtung erfolgen, da der Einfülltrichter die Einfüllöffnung abdeckt und von daher keine Gefährdung von dieser ausgeht. Wird jedoch der Einfülltrichter in der Gleitführung in eine von der Position über der Durchgangsöffnung der Gleitführung entfernte Position verschoben - wobei die Einfüllöffnung freigegeben wird -, bleibt das entsprechende Signal vom Signalgeber an der Durchgangsöffnung der Gleitführung aus und der Antrieb der Schnecke der Plastifiziereinrichtung wird abgeschaltet. Eine Gefahr für Personen oder die Plastifiziereinrichtung von der in dieser Position des Einfülltrichters frei zugänglichen Einfüllöffnung geht somit durch die erfindungsgemäß stillgesetzte Schnecke der Plastifiziereinrichtung nicht mehr aus. Reinigungsarbeiten können nun an der frei zugänglichen Einfüllöffnung der Plastifiziereinrichtung gefahrlos vorgenommen werden. Erst wenn der Einfülltrichter erneut in seine über der Durchgangsöffnung der Gleitführung befindliche Position, in der er mit der Einfüllöffnung vollständig korrespondiert, verschoben wird, gibt der Signalgeber erneut ein Signal ab, mit welchem die Inbetriebnahme der Plastifiziereinrichtung ermöglicht ist.

Die Gleitführung kann beispielsweise von einer am Gehäuse befestigten Grundplatte und an der Grundplatte an einander gegenüberliegenden Seiten und parallel zueinander befestigten Seitenführungsschienen gebildet sein. Der Einfülltrichter ist dabei an seiner die Austrittsöffnung aufweisenden Seite mit einer Schiebeplatte, die seitlich flanschartig vorsteht, verbunden, die eine mit der Austrittsöffnung des Einfülltrichters korrespondierende Durchgangsöffnung aufweist. Die Schiebeplatte mit dem daran befestigten Einfülltrichter liegt auf der Grundplatte auf und ist mit ihren flanschartigen Seiten in der Gleitführung verschiebbar geführt. Somit ist es möglich, den Einfülltrichter in eine Position zu verschieben, in der seine Austrittsöffnung und die damit korrespondierende Durchgangsöffnung der Schiebeplatte mit der Durchgangsöffnung in der Grundplatte und der daran anschließenden Einfüllöffnung der Plastifiziereinrichtung vollständig korrespondiert und die Zuführung des Rohmaterials zu der Schnecke ermöglicht.

In einer vorteilhaften Weiterbildung der Erfindung wird vorgeschlagen, daß der Einfülltrichter in der Gleitführung dergestalt zwischen zwei Endpositionen verschiebbar ist, daß er sich in der einen Endposition über der Einfüllöffnung des Gehäuses befindet und in der anderen Endposition die Einfüllöffnung vollständig freigibt. Der in der Gleitführung verschiebbare Einfülltrichter braucht somit lediglich zwischen den beiden Endpositionen, in denen er an einen Endanschlag gelangt, verschoben zu werden, um sich in der einen Endposition exakt mit seiner Austrittsöffnung über der Einfüllöffnung des Gehäuses zu befinden und hier eine Zuführung des Rohmaterials bewirken kann und in der anderen Position in einer die Einfüllöffnung für Reinigungszwecke und dergleichen vollständig freigebenden Position zu befinden. Der Signalgeber ist hierbei der Endposition des Einfülltrichters über der Einfüllöffnung zugeordnet und gibt bei Positionierung des Einfülltrichters in dieser Endposition ein entsprechendes Signal ab, welches den Betrieb und damit den Antrieb der Schnecke der Plastifiziereinrichtung ermöglicht, während bei allen anderen Positionen des Einfülltrichters, insbesondere denen, in denen die Einfüllöffnung der Plastifiziereinrichtung frei zugänglich wird, dieses Signal des Signalgebers ausbleibt und der Antrieb der Schnecke der Plastifiziereinrichtung unterbrochen ist.

Zur Vermeidung des Trockenlaufens der Schnecke wird erfindungsgemäß vorgeschlagen, das Abschalten des Antriebs der Schnecke in Abhängigkeit von der Signalgabe des Signalgebers zeitverzögert durchzuführen.

Hierbei kann sich die Zeitverzögerung an der Verschiebezeit des Einfülltrichters orientieren, wobei eine Abschaltung spätestens bei freiwerdender Einfüllöffnung des Gehäuses erfolgen sollte.

In Weiterbildung der Erfindung wird darüber hinaus vorgeschlagen, daß ein zweiter Signalgeber zur Bestimmung der Position des Einfülltrichters in einer die Einfüllöffnung freigebenden Position vorgesehen ist. Mit diesem weiteren Signalgeber ist eine Abschaltung des Antriebes der Schnecke der Plastifiziereinrichtung in zwei verschiedenen Arten möglich. So kann der Antrieb der Schnecke der Plastifiziereinrichtung in dem Fall, daß nur das Signal des der Endposition des Einfülltrichters über der Einfüllöffnung zugeordneten Signalgebers ausbleibt, mit einer vorgebbaren Zeitverzögerung abgeschaltet werden, da sich in diesem Fall der Einfülltrichter lediglich nicht ganz exakt über der Einfüllöffnung der Plastifiziereinrichtung befindet, diese jedoch beispielsweise mit der Schiebeplatte noch abdeckt, so daß keine Gefahr durch die Einfüllöffnung auf Bedienungspersonen ausgeht. Die zeitverzögerte Abschaltung des Antriebes der Schnecke ermöglicht somit, in der Einfüllöffnung der Plastifiziereinrichtung noch befindliche Restmengen an Rohmaterial zu verarbeiten, bevor der Antrieb der Schnecke abgeschaltet wird, um Beschädigungen der Plastifiziereinrichtung durch Trockenlaufen zu verhindern.

Sobald der zweite Signalgeber, der Positionen des Einfülltrichters erkennt, in der die Einfüllöffnung freigegeben ist und von daher von ihr Gefahren für Bedienungspersonen ausgehen, ein entsprechendes Signal abgibt, wird der Antrieb der Schnecke der Plastifiziereinrichtung schlagartig abgestellt, so daß die von der offen zugänglichen Einfüllöffnung ausgehenden Gefahren unverzüglich gebannt sind.

Eine weitere Ausführungsform der Erfindung sieht vor, daß zwei Einfülltrichter vorgesehen und auf der Schiebeplatte befestigt und in der Gleitführung verschiebbar geführt sind. Hierbei weist die Schiebeplatte je eine mit der jeweiligen Austrittsöffnung der Einfülltrichter korrespondierende Durchgangsöffnung auf und jeder Einfülltrichter ist mit einem Signalgeber zur Bestimmung seiner Position in bezug auf die Einfüllöffnung des Gehäuses ausgerüstet. Eine derartige Ausbildung mit zwei Einfülltrichtern ermöglicht es, ohne größere Produktionsausfälle einen Wechsel des zuzuführenden Rohmaterials vorzunehmen, indem einfach die mit dem jeweiligen Rohmaterial befüllten Einfülltrichter durch eine Verschiebebewegung in der Gleitführung ausgetauscht werden. Durch Ausbildung je eines Signalgebers an jedem Einfülltrichter kann sodann der Betrieb der Plastifiziereinrichtung derart gesteuert werden, daß der Antrieb der Schnecke nur bei einem sich über der Einfüllöffnung des Gehäuses befindlichen Einfülltrichter anschaltbar und betreibbar ist.

Eine weitere vorteilhafte Ausgestaltung der Erfindung sieht ebenfalls vor, daß zwei Einfülltrichter vorgesehen und auf der Schiebeplatte befestigt und in der Gleitführung verschiebbar geführt sind, wobei die Schiebeplatte je eine mit der jeweiligen Austrittsöffnung der Einfülltrichter korrespondierende Durchgangsöffnung aufweist und die Gleitführung eine solche Länge aufweist, daß die Schiebeplatte aus einer Endposition, in der der erste Einfülltrichter über der Einfüllöffnung des Gehäuses positionierbar ist, in eine zweite Endposition, in der der zweite Einfülltrichter über der Einfüllöffnung positionierbar ist, verschiebbar ist.

Zur Steuerung des Antriebes der Schnecke der Plastifiziereinrichtung wird hierbei vorgeschlagen, daß jeder Endposition der Schiebeplatte je ein Signalgeber zur Bestimmung der jeweiligen Endposition zugeordnet ist. Auf diese Weise kann der Antrieb der Schnecke der Plastifiziereinrichtung so gesteuert werden, daß er nur dann anschaltbar ist, wenn sich die Schiebeplatte in einer ihrer Endpositionen, in der einer der Einfülltrichter über der Einfüllöffnung des Gehäuses positioniert ist, befindet. Da, wie bereits erwähnt, bei dieser Ausgestaltung mit zwei Einfülltrichtern auf einer gemeinsamen Schiebeplatte zu keinem Zeitpunkt die Einfüllöffnung der Plastifiziereinrichtung zugänglich ist, kann die Abschaltung des Antriebes der Schnecke bei Ausbleiben des Signals von einem der Signalgeber mit zeitlicher Verzögerung erfolgen, um in der Einfüllöffnung des Gehäuses noch vorhandenes Restmaterial in der Plastifiziereinrichtung zu verarbeiten, bevor der Antrieb der Schnecke abgeschaltet wird. Auf diese Weise ist auch möglich, ohne Unterbrechung des Betriebes der Plastifiziereinrichtung die Einfülltrichter und das darin befindliche Rohmaterial durch Verschiebung der beiden Einfülltrichter einfach gewechselt werden. Das während der Verschiebebewegung kurzfristig ausbleibende Signal des ersten Signalgebers bis zur Signalabgabe des zweiten Signalgebers, wenn der andere Einfülltrichter über der Einfüllöffnung positioniert ist, wird durch die zeitlich verzögerte Abschaltung des Antriebes der Schnecke kompensiert, so daß ein kontinuierlicher Betrieb der Plastifiziereinrichtung möglich ist.

Auch ist es hierbei anhand des jeweils ein Signal abgebenden Signalgebers möglich, den jeweils über der Einfüllöffnung befindlichen Einfülltrichter zu bestimmen.

Auf diese Weise sind beispielsweise Farbwechsel im Rohstoff oder auch die Einleitung von Reinigungsgranulat in die Plastifiziereinrichtung ohne wesentliche Produktionsausfälle schnell durchführbar, wobei die Signalgeber und die davon abhängige Abschaltung des Antriebes der Schnecke einer Beschädigung der Maschine durch Trockenlaufen vorbeugen.

In einer weiteren vorteilhaften Ausgestaltung der Erfindung wird vorgeschlagen, daß die Schiebeplatte aus zwei lösbar miteinander verbindbaren Teilplatten gebildet ist und jeder Einfülltrichter auf einer Teilplatte der Schiebeplatte befestigt ist. Bei dieser Ausgestaltung der Erfindung wird nach wie vor ein schneller Wechsel des über die beiden Einfülltrichter zuführbaren Rohmaterials in die Plastifiziereinrichtung ermöglicht. Darüber hinaus ist es aber auch möglich, die beiden Teilplatten der Schiebeplatte aufzutrennen und beide Einfülltrichter mit den dazugehörigen Teilplatten in jeweils eine Endposition der Schiebeplatte zu verschieben, so daß die Einfüllöffnung der Plastifiziereinrichtung beispielsweise zu Reinigungszwecken frei zugänglich ist. Um der hierbei auftretenden Gefährdung durch die frei zugängliche Einfüllöffnung zu begegnen, wird vorgeschlagen, daß die beiden Teilplatten der Schiebeplatte an ihren einander zugewandten Seiten mit einem Signalgeber ausgerüstet sind, dergestalt, daß eine aneinander anliegende Position der Teilplatten mittels des Signalgebers erkennbar und erfaßbar ist. Solange dieser Signalgeber eine aneinander anliegende Position der beiden Teilplatten signalisiert, ist ein Betrieb der Plastifiziereinrichtung analog zu dem vorangehend geschilderten Ausführungsbeispiel mit durchgehender Schiebeplatte ermöglicht. Bleibt jedoch das Signal des Signalgebers der beiden Teilplatten aus, weil die Verbindung zwischen beiden Teilplatten aufgehoben wurde und folglich die Einfüllöffnung der Plastifiziereinrichtung zugänglich ist, wird der Antrieb der Schnecke schlagartig abgeschaltet, so daß von der im Inneren der Plastifiziereinrichtung befindlichen Schnecke keinerlei Gefahren mehr für Bedienungspersonal ausgehen können.

In einer weiteren Ausgestaltung der Erfindung ist die Trichterführung als Revolverführung mit einer auf dem Gehäuse ortsfest angeordneten Tragscheibe, die mit einer mit der Einfüllöffnung des Gehäuses korrespondierenden und außermittig in der Tragscheibe ausgebildeten Durchgangsöffnung ausgebildet ist und einer auf der Tragscheibe angeordneten und um ihren Mittelpunkt drehbar antreibbaren Revolverscheibe ausgebildet. Die Revolverscheibe weist mehrere voneinander beabstandete Durchgangsöffnungen auf, die durch Drehung der Revolverscheibe in eine mit der Einfüllöffnung des Gehäuses und der Durchgangsöffnung der Tragscheibe korrespondierende Position bewegbar sind. Über diesen Durchgangsöffnungen der Revolverscheibe kann sodann jeweils ein Einfülltrichter befestigt werden, die durch Drehung der Revolverscheibe über der Einfüllöffnung des Gehäuses positionierbar sind. Darüber hinaus können auch eine oder mehrere Durchgangsöffnungen der Revolverscheibe nicht mit entsprechenden Einfülltrichtern besetzt werden, so daß bei Drehung dieser offenen Durchgangsöffnung über die Einfüllöffnung der Plastifiziereinrichtung diese Einfüllöffnung beispielsweise zu Reinigungszwecken frei zugänglich ist.

Um die Gefahren für Bedienungspersonal und auch die Maschine auszuschalten, wird hierbei vorgeschlagen, jedem Einfülltrichter und/oder jeder Durchgangsöffnung einen Signalgeber zur Bestimmung der Position in bezug auf die Einfüllöffnung des Gehäuses zuzuordnen. Somit kann wiederum der Betrieb der Plastifiziereinrichtung derart gesteuert werden, daß der Antrieb der Schnecke nur dann anschaltbar ist, wenn ein an einem Einfülltrichter und /oder der zugehörigen Durchgangsöffnung angeordneter Signalgeber die Positionierung eines Einfülltrichters über der Einfüllöffnung des Gehäuses der Plastifiziereinrichtung signalisiert.

Vorteilhaft sind jedoch die Signalgeber so angeordnet, daß jeder jeweils einem Einfülltrichter und/oder der jeweiligen Durchgangsöffnung zugeordneter Signalgeber in einem unterschiedlichen radialen Abstand vom Mittelpunkt der Revolverscheibe angeordnet ist, so daß bei Signalabgabe der jeweilige Einfülltrichter anhand des radialen Abstandes erkennbar ist, was beispielsweise für automatische Steuerungseinheiten der erfindungsgemäßen Vorrichtung von Vorteil ist.

Die Steuereinheit der Vorrichtung dient dazu, die von den Signalgebern in Abhängigkeit von der Position der Einfülltrichter und/oder Teilplatten der Schiebeplatte abgegebenen Signale logisch auszuwerten. Beispielsweise kann eine von der Position der Einfülltrichter in bezug auf die Einfüllöffnung des Gehäuses abhängige An- bzw. Abschaltung des Antriebes der Schnecke bewirkt werden, wobei diese An- bzw. Abschaltung schlagartig oder auch zeitlich verzögert erfolgen kann. Es ist darüber hinaus aber auch möglich, mittels der Steuereinheit eine Erkennung des jeweils über der Einfüllöffnung befindlichen Einfülltrichters zu bewirken, was anhand von logischen Verknüpfungen und entsprechender Positionierung der jeweiligen Signalgeber leicht durchführbar ist.

Um die Handhabung der Einfülltrichter zu erleichtern, insbesondere wenn diese ein sehr hohes Fassungsvolumen und entsprechendes Gewicht aufweisen, wird vorgeschlagen, daß die Einfülltrichter mittels eines elektrischen, pneumatischen oder hydraulischen Antriebes bewegbar sind.

Die vorangehend beschriebenen Signalgeber können beispielsweise als Endschalter, wie elektrische Näherungsschalter (Initiatoren), Lichtschranken, mechanische Grenztaster, Magnetschalter ausgebildet sein, die üblicherweise aus mehreren zusammenwirkenden Teilen bestehen.

Selbstverständlich ist es im Rahmen der Erfindung auch möglich, andere geeignete Signalgeber zu verwenden, beispielsweise analoge Schalter, mit denen auch die Ermittlung der konkreten Position der Einfülltrichter bzw. Schiebeplatten ermöglicht ist.

Eine weitere vorteilhafte Ausgestaltung der Erfindung sieht vor, daß die Grundplatte oder Tragscheibe der Trichterführung in einem von dem Bereich der mit der Einfüllöffnung korrespondierenden Durchgangsöffnung entfernten Bereich eine mit einem Schieber verschließbare Entleerungsöffnung für einen Einfülltrichter aufweist und der Einfülltrichter in eine mit der Entleerungsöffnung korrespondierende Postion bewegbar ist. Bei einem in dieser Position in der Entleerungsöffnung befindlichen Einfülltrichter ist es sodann einfach möglich, nach dem Öffnen des die Entleerungsöffnung verschließenden Schiebers den Einfülltrichter in ein unterhalb der Entleerungsöffnung befindliches Gefäß, wie einen Sack oder ähnliches, zu entleeren, wenn beispielsweise das im Einfülltrichter befindliche Rohmaterial gegen ein anderes Rohmaterial ausgetauscht werden soll.

Die Erfindung wird nachfolgend von Ausführungsbeispielen in der Zeichnung näher erläutert. Es zeigen
- Fig. 1: in schematisierter Darstellung die Seitenansicht einer erfindungsgemäßen Vorrichtung zum Zuführen von Rohmaterial
- Fig. 2: in schematisierter Darstellung eine weitere Ausführungsform der Erfindung
- Fig. 3: in schematisierter Darstellung eine weitere Ausführungsform der Erfindung
- Fig. 4: einen Schnitt durch die erfindungsgemäße Vorrichtung gemäß Pfeil B in Fig. 2
- Fig. 5: eine Aufsicht auf eine weitere Ausgestaltungsform der Erfindung
- Fig. 6: die Seitenansicht der Vorrichtung gemäß Fig. 5
- Fig. 7: eine Prinzipdarstellung der Vorrichtung gemäß Fig. 1
- Fig. 8a: eine Prinzipdarstellung der erfindungsgemäßen Vorrichtung gemäß Fig. 2
- Fig. 8b: eine Variante der erfindungsgemäßen Vorrichtung gemäß Fig. 2.

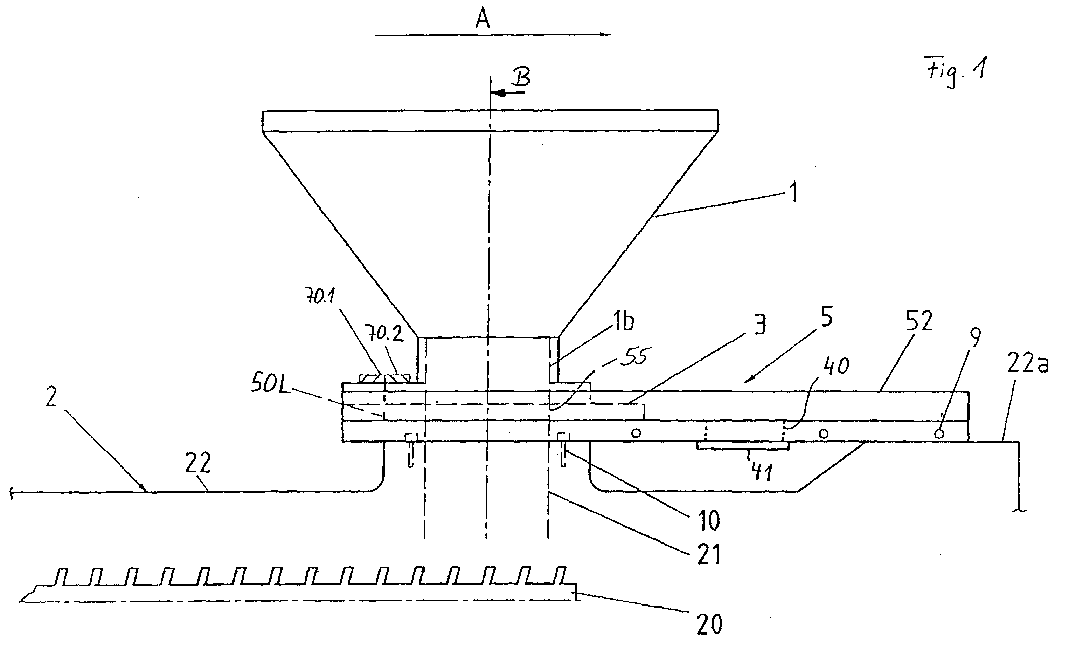

In der Fig. 1 ist eine Vorrichtung zum Zuführen von Rohmaterial in eine Plastifiziereinrichtung 2 mit einer in einem Gehäuse 22 mit Einfüllöffnung 21 drehbar antreibbaren Schnecke 20 am Beispiel einer Extrusionsmaschine dargestellt.

Die Vorrichtung umfaßt einen Einfülltrichter 1 für das zuzuführende Rohmaterial, der in einer als Gleitführung 5 ausgebildeten Trichterführung verschiebbar geführt ist und in der Darstellung gemäß Fig. 1 mit seiner Austrittsöffnung 1b über der Einfüllöffnung 21 der Plastifiziereinrichtung 2 zwecks Zuführung des Rohmaterials positioniert ist.

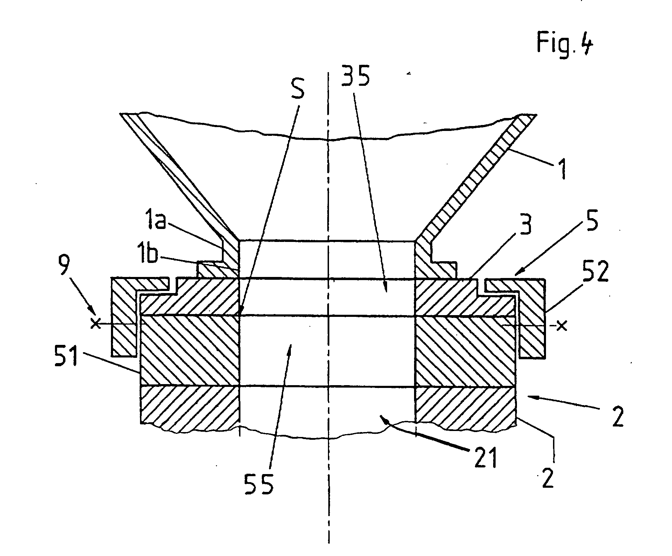

Wie sich auch aus der zugehörigen Schnittansicht der Fig. 4 gemäß Pfeil B in Fig. 1 ergibt, umfaßt die Gleitführung 5 eine mittels Schrauben 10 auf dem Gehäuse 22 der Plastifiziereinrichtung 2 befestigte Grundplatte 51, die im Bereich der Einfüllöffnung 21 eine mit dieser korrespondierende Durchgangsbohrung 55 aufweist. An der Grundplatte 51 sind an einander gegenüberliegenden Seiten und parallel zueinander Seitenführungsschienen 52 mittels Schrauben 9 befestigt, die einen etwa L-förmigen Querschnitt aufweisen. Auf der Grundplatte 51 und zwischen den beiden Seitenführungsschienen 52 ist eine Schiebeplatte 3 entlang der Gleitebene S verschiebbar geführt und der Einfülltrichter 1 ist mit seiner die Austrittsöffnung 1b aufweisenden Seite 1a auf der Schiebeplatte 3 befestigt. Während die Gleitführung 5 mit Grundplatte 51 und Seitenführungsschienen 52 ortsfest mit dem Gehäuse der Plastifiziereinrichtung verbunden ist, stellen die Schiebeplatte 3 und der daran befestigte Einfülltrichter 1 bewegbare, nämlich in der Gleitführung 5 verschiebbare Teile dar.

Die Schiebeplatte 3 weist eine mit der Austrittsöffnung 1b des Einfülltrichters 1 korrespondierende Durchgangsbohrung 35 auf, so daß bei entsprechender Positionierung des Einfülltrichters 1, wie er in der Fig. 1 dargestellt ist, die Zuführung des Rohmaterials über den Einfülltrichter 1, dessen Austrittsöffnung 1b, die Durchtrittsöffnung 35 in der Schiebeplatte und die damit korrespondierende Durchgangsöffnung 55 in der Grundplatte in die darunter befindliche Enfüllöffnung 21 des Gehäuses 22 bewirkbar ist.

Um eine genaue Positionierung des Einfülltrichters 1 und der Schiebeplatte 3 in dieser dargestellten Position, in der die Durchgangsöffnungen 35, 55 mit der Austrittsöffnung 1b des Einfülltrichters 1 und der Einfüllöffnung 21 des Gehäuses 22 korrespondieren, zu gewährleisten, weist die Gleitführung 5 in der Darstellung gemäß Fig. 1 einen linksseitigen Anschlag 50 L auf, an dem die Schiebeplatte 3 in ihrer dargestellten linken Endposition anschlägt, wenn sämtliche Durchgangsöffnungen miteinander fluchten.

Diese Position des Einfülltrichters 1 stellt die Betriebsstellung dar, in der eine Zuführung des Rohmaterials aus dem Einfülltrichter 1 in die Einfüllöffnung 21 des Gehäuses 22 der Plastifiziereinrichtung 2 ermöglicht ist. Um diese Position zu erkennen und zu erfassen, ist im Bereich des linksseitigen Anschlags 50 L der Gleitführung ein Signalgeber mit seinen beiden Teilen 70.1, 70.2 vorgesehen, wobei das Signalgeberteil 70.1 ortsfest an der Gleitführung 5 befestigt ist und das Signalgeberteil 70.2 am Einfülltrichter 1 bzw. dessen Gleitführung 3 befestigt ist und bei einer Verschiebung des Einfülltrichters 1 in der Gleitführung 5 gemäß Pfeil A entsprechend mitbewegt wird. Bei der in der Fig. 1 dargestellten Endposition, in der der Einfülltrichter über der Einfüllöffnung 21 des Gehäuses 22 positioniert ist, liegen die beiden Signalgeberteile 70.1, 70.2 aneinander und geben ein entsprechendes Signal an eine nicht näher dargestellte Steuerung ab, die sodann den Antrieb der Schnecke 20 ermöglicht.

Wird jedoch der Einfülltrichter 1 gemäß Pfeil A in Fig. 1 nach rechts innerhalb der Gleitführung 5 verschoben, beispielsweise um die Einfüllöffnung 21 zu Reinigungszwecken zugänglich zu machen, geht von der im Inneren der Plastifiziereinrichtung 2 angetriebenen Schnecke 20 eine erhebliche Gefahr aus, wie bereits vorangehend erläutert worden ist. Gleichzeitig mit der Verschiebebewegung des Einfülltrichters 1 in Pfeilrichtung A werden jedoch die beiden Signalgeberteile 70.1, 70.2 zwangsläufig getrennt und das von ihnen abgegebene Signal bleibt aus. Nunmehr kann über die Steuerung der Plastifiziereinrichtung 2 ein schlagartiges Abschalten des Antriebes der Schnecke 20 bewirkt werden, wodurch von der Schnecke 20 über die offen zugängliche Einfüllöffnung 21 nunmehr keinerlei Gefahren mehr für Bedienungspersonal ausgehen und die Reinigung der Einfüllöffnung 21 gefahrlos durchgeführt werden kann.

Erst wenn der Einfülltrichter entgegen Pfeilrichtung A erneut in seine Endposition durch Anschlag am linksseitigen Anschlag 50 L bewegt worden ist, liegen die beiden Signalgeberteile 70.1 und 70.2 wieder aneinander und geben ein entsprechendes Signal an die Steuerung ab, so daß der Antrieb der Schnecke 20 erneut angeschaltet werden kann.

In der schematisierten Darstellung gemäß Fig. 7 ist eine vorteilhafte Weiterbildung der in der Fig. 1 dargestellten Vorrichtung gezeigt. Wie dieser Darstellung zu entnehmen ist, ist die Einfüllöffnung 21 der Plastifiziereinrichtung 2 nicht nur bei der in Fig. 7 strichliert dargestellten Endposition (vergleiche Darstellung Fig. 1) vollständig abgedeckt, sondern diese Einfüllöffnung 21 wird von der über den Einfülltrichter 1 vorstehenden Schiebeplatte 3 auch noch bei einer begrenzten Verschiebung in Pfeilrichtung A abgedeckt, wobei jedoch keine Zuführung des Rohmaterials mehr aus dem Einfülltrichter 1 erfolgen kann. In diesem Fall bleibt zwar schon das Signal von den Signalgeberteilen 70.1, 70.2 aus, was signalisiert, daß kein Rohmaterial mehr zugeführt werden kann, jedoch besteht für Personen noch keine Gefahr, da die Einfüllöffnung 21 noch nicht zugänglich ist. In einem solchen Fall ist es möglich, die Abschaltung des Antriebes der Schnecke 20 erst mit zeitlicher Verzögerung nach Signalgabe durchzuführen, um eventuell in der Einfüllöffnung 21 noch vorhandenes Restmaterial in der Plastifiziereinrichtung 2 erst zu verarbeiten, bis es zu einem Stillstand der Schnecke 20 kommt. Sollte jedoch der Einfülltrichter 1 mit seiner Schiebeplatte 3 gemäß Pfeil A aus der mit ausgezogenen Linien dargestellten Position weiter nach rechts verschoben werden, wird die Einfüllöffnung 21 von außen zugänglich, so daß nicht nur eine Gefahr für die Maschine durch Trockenlaufen droht, sondern die offen zugängliche Einfüllöffnung 21 für Bedienungspersonal eine zusätzliche Gefahrenquelle darstellt. Zu diesem Zweck ist in dem Ausführungsbeispiel gemäß Fig. 7 ein weiterer Signalgeber 72 in einer solchen Position an der Gleitführung 5 angeordnet, daß er jegliche Position des Einfülltrichters 1 und seiner Schiebeplatte 3, bei der die Einfüllöffnung 21 zugänglich ist, erfaßt und durch Abgabe eines entsprechenden Signals an die Steuerung signalisiert. In einem solchen Fall, in dem der Signalgeber 72 anspricht, bewirkt die Steuerung eine sofortige Abschaltung des Antriebes der Schnecke 20.

Diese unterschiedlichen Schaltkriterien - zeitverzögerte Abschaltung einerseits bzw. schlagartige Abschaltung andererseits - können von der Steuerung durch einfache Logikverknüpfungen in bekannter Weise bewirkt werden.

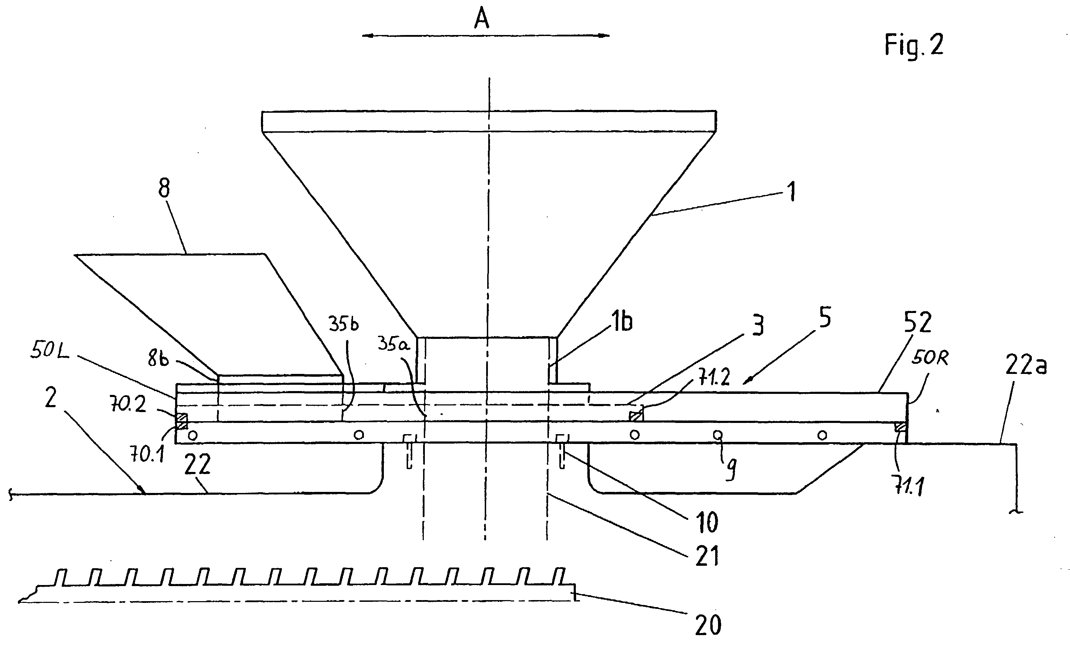

Eine weitere vorteilhafte Ausgestaltung der Erfindung ist in der Fig. 2 dargestellt. Im Vergleich mit dem Ausführungsbeispiel gemäß Fig. 1 sind hier zwei Einfülltrichter 1, 8 vorgesehen, die nebeneinander auf einer gemeinsamen Schiebeplatte 3 verschiebbar gemäß Pfeil A in der ansonsten analog zum Ausführungsbeispiel gemäß Fig. 1 aufgebauten Gleitführung 5 geführt sind. Der Einfülltrichter 1 kann dabei beispielsweise der Zuführung von Rohmaterial während des eigentlichen Betriebs der Plastifiziereinrichtung 2 und der hier beispielsweise kleiner ausgeführte Einfülltrichter 8 der Zuführung von Reinigungsgranulat zur Reinigung der Schnecke 20 vorgesehen sein. Dementsprechend weist die Gleitführung für jeden Einfülltrichter 1 bzw. 8 eine mit dessen Austrittsöffnung 1b, 8b korrespondierende Durchgangsöffnung 35a bzw. 35b auf. Ein Wechsel des Rohmaterials kann nun dadurch bewirkt werden, daß beispielsweise der Einfülltrichter 1 aus seiner in der Fig. 2 dargestellten Position über der Einfüllöffnung 21 durch eine Verschiebung gemäß Pfeil A nach rechts bewegt wird und der auf der gleichen Schiebeplatte 3 positionierte zweite Einfülltrichter 8 über der Einfüllöffnung 21 des Gehäuses 22 positioniert wird.

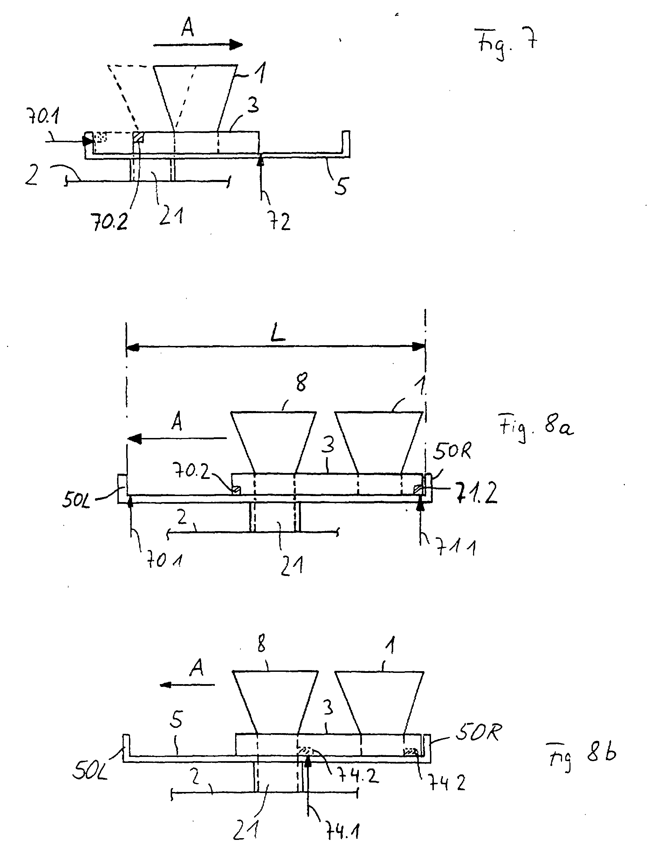

Wie auch der schematischen Darstellung gemäß Fig. 8 entnehmbar, weist dabei die Gleitführung 5 vorteilhaft eine solche Länge L auf, daß die Gleitführung 3 aus einer Endposition, in der der Einfülltrichter 1 über der Einfüllöffnung 21 positioniert ist in eine andere Endposition, in der der Einfülltrichter 8 über der Einfüllöffnung 21 positioniert ist, verschiebbar ist.

Die exakte Positionierung der Einfülltrichter 1 bzw. 8 über der Einfüllöffnung 21, in der die Austrittsöffnung 1b bzw. 8b, die Durchgangsöffnung 35a bzw. 35b in der Schiebeplatte 3 und die Durchgangsöffnung 55 in der Grundplatte der Gleitführung 5 mit der Einfüllöffnung 21 fluchten, wird wesentlich erleichtert, indem die Gleitführung 5 an ihren beiden Enden einen linksseitigen Anschlag 50 L und einen rechtsseitigen Anschlag 50 R für die jeweiligen Endpositionen der Schiebeplatte 3 bildet.

Diese beiden Endpositionen der Schieberplatt3, in denen jeweils ein Einfülltrichter 1 bzw. 8 über der Einfüllöffnung 21 positioniert ist, wird mittels geeigneten Signalgebern erfaßt. Dazu ist im Bereich des linksseitigen Anschlages 50 L der Gleitführung 5 ein Signalgeber mit Signalgeberteilen 70.1 und 70.2 und im Bereich des rechtsseitigen Anschlages 50 R ein Signalgeber mit Signalgeberteilen 71.1, 71.2 vorgesehen. Hierbei sind jeweils die Teile 70.1 und 71.1 ortsfest mit der Gleitführung 5 verbunden und die Teile 70.2 bzw. 70.1 sind mitsamt der Gleitführung 3 verschiebbar.

Wie sich aus den beiden Darstellungen der Endpositionen der Schiebeplatte 3 gemäß den Fig. 2 und 8a ergibt, ist in keiner der möglichen Verschiebepositionen der Schiebeplatte 3 und der darauf befestigten Einfülltrichter 1, 8 die Einfüllöffnung 21 im Gehäuse 22 der Plastifiziereinrichtung 2 von außen zugänglich, so daß bei dieser Ausführungsform von der Einfüllöffnung 21 und der darunter befindlichen Schnecke 20 keine Gefahren für Bedienpersonal ausgehen. Die Signalgeber 70.1, 70.2 bzw. 71.1., 71.2 dienen somit lediglich dazu, Positionen der Schiebeplatte und der Einfülltrichter zu erkennen und zu signalisieren. Die Steuerung der Plastifiziereinrichtung 2 ist bei diesem Ausführungsbeispiel so ausgelegt, daß sie beim Ausbleiben der Signale von den Signalgebern 70.1, 70.2 bzw. 71.1, 71.2 den Antrieb der Schnecke 20 mit einer vorbestimmbaren zeitlichen Verzögerung abschaltet. Diese zeitliche Verzögerung des Abschaltens dient dazu, noch in der Einfüllöffnung 21 befindliches Restmaterial zu verarbeiten, bis der Antrieb der Schnecke 20 abgeschaltet wird. Darüber hinaus ermöglicht diese zeitlich verzögerte Abschaltung den Wechsel der Einfülltrichter 1, 8 ohne Unterbrechungen des Antriebes der Schnecke 20, da die zeitliche Verzögerung das Ausbleiben der Signale von den Signalgebern während der Verschiebebewegung überbrückt, bis erneut eine Endposition der Schiebeplatte 3 und entsprechende Positionierung der Einfülltrichter 1 bzw. 8 erfolgt und die jeweiligen Signalgeber 70.1, 70.2 oder 71.1, 71.2 erneut ein Signal abgeben.

Bei dieser eben beschriebenen Anordnung der Signalgeber in den Endpositionen der Schiebeplatte 3 innerhalb der Gleitführung 5 kann überdies auch durch einfache logische Verknüpfungen eine Bestimmung des gerade über der Einfüllöffnung 21 befindlichen Einfülltrichters 1 oder 8 von der Steuerung der Plastifiziereinrichtung vorgenommen werden und in weitere Steuerungstätigkeiten einbezogen werden. Sollte der aus den Teilen 70.1 und 70.2 gebildete Signalgeber ein Signal abgeben, befindet sich der Einfülltrichter 1 über der Einfüllöffnung 21, während bei Abgabe eines Signals des aus den Teilen 71.1 und 71.2 bestehenden Signalgebers sich der Einfülltrichter 8 über der Einfüllöffnung 21 des Gehäuses 22 der Plastifiziereinrichtung 2 befindet.

Demgegenüber zeigt die Fig. 8b eine vereinfachte Anordnung, bei der ein Teil 74.1 eines Signalgebers ortsfest im Bereich der Einfüllöffnung 21 an der Gleitführung 5 angeordnet ist und an jedem Einfülltrichter 1, 8 ein weiteres Signalgeberteil 74.2 befestigt ist, welches die korrekte Positionierung des jeweiligen Einfülltrichters 1,8 über der Einfüllöffnung 21 erkennen läßt. Bei dieser gegenüber dem Ausführungsbeispiel gemäß Fig. 8a einfacheren Ausgestaltung ist jedoch keine Erkennung anhand des vom Signalgeber abgegebenen Signales möglich, ob sich Einfülltrichter 8 oder Einfülltrichter 1 über der Einfüllöffnung 21 befindet.

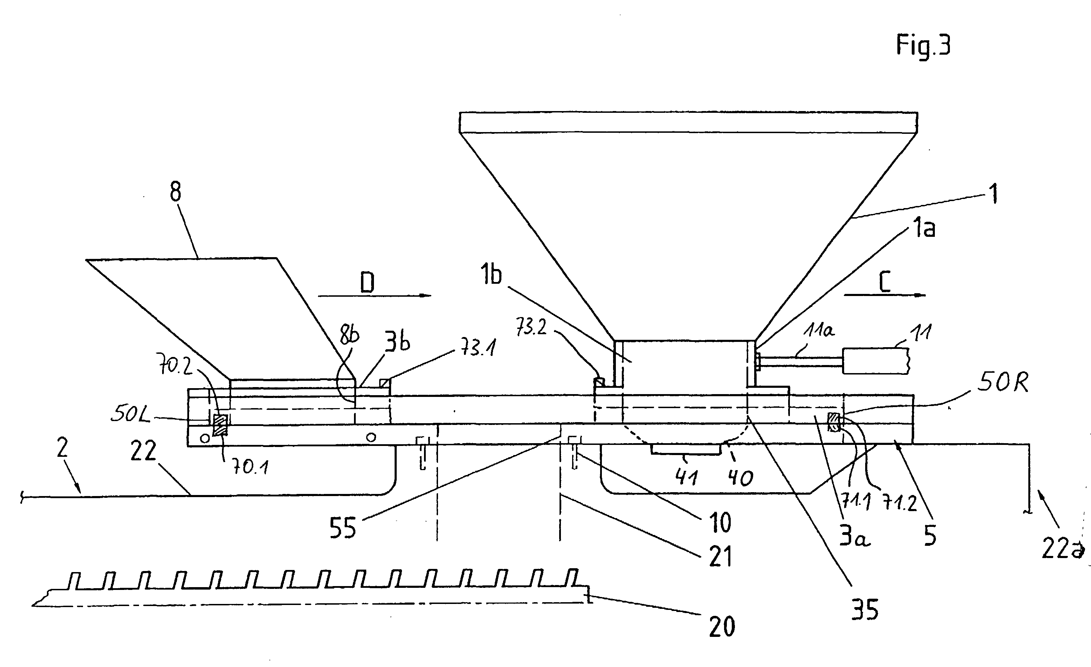

Wie vorangehend erläutert, kann bei der Ausgestaltung mit zwei Einfülltrichtern 1, 8 auf einer durchgehenden Schiebeplatte 3 und entsprechender Wahl der Länge L der Gleitführung 5 eine Gefährdung von Personen durch die im Inneren der Plastifiziereinrichtung 2 befindliche Schnecke 20 ausgeschlossen werden, da die Einfüllöffnung 21 zu keinem Zeitpunkt und keiner Verschiebeposition von außen zugänglich ist. Dies kann jedoch je nach Anwendungsfall nachteilig sein, da sodann keine Reinigung der Einfüllöffnung 21 von außen erfolgen kann. Um diese Reinigung der Einfüllöffnung 21 von außen zu ermöglichen, kann, wie in Fig. 3 dargestellt, die Schiebeplatte 3 aus zwei lösbar miteinander verbundenen Teilplatten 3a, 3b aufgebaut sein. Solange diese beiden Teilplatten 3a, 3b miteinander verbunden sind, was hier nicht näher dargestellt ist, unterscheidet sich die Funktion in keiner Weise von den vorangehend geschilderten Ausführungsbeispielen mit gemeinsamer Schiebeplatte 3 gemäß den Fig. 2, 8a und 8b. Wird jedoch die Verbindung zwischen den beiden Teilplatten 3a, 3b aufgehoben, ist es möglich, wie in der Fig. 3 dargestellt, beide Teilplatten 3a, 3b in jeweils eine Endposition der Schiebeplatte 3 zu bewegen, d.h. die Teilplatte 3b mit dem Einfülltrichter 8 an den linksseitigen Anschlag 50 L und die Teilplatte 3a mit dem Einfülltrichter 1 an den rechtsseitigen Anschlag 50 R der Gleitführung 5.

Nunmehr ist die Einfüllöffnung 21 von außen frei zugänglich, so daß von der im Inneren der Plastifiziereinrichtung 2 befindlichen Schnecke 20 Gefahren für die Bedienungsperson ausgehen können, wenn diese in die Einfüllöffnung 21 hineingreift und gegebenenfalls von der sich drehenden Schnecke 20 erfaßt werden kann. Um dies zu vermeiden, ist ein weiterer Signalgeber mit Signalgeberteilen 73.1, 73.2 vorgesehen, die im Bereich der Verbindungsfläche der beiden Teilplatten 3a, 3b angeordnet sind. Im vorliegenden Beispiel. ist das Signalgeberteil 73.1 an der Teilplatte 3b und das Signalgeberteil 73.2 an der Teilplatte 3a befestigt. Sobald die beiden Teilplatten 3a, 3b voneinander getrennt werden und nicht mehr aneinander anliegen, bleibt das entsprechende Signal vom Signalgeber mit den Teilen 73.1, 73.2 aus, so daß eine schlagartige Abschaltung des Antriebes der Schnecke 20 bewirkt werden kann und sodann von der nun zugänglichen Einfüllöffnung 21 der Plastifiziereinrichtung 2 keinerlei Gefahren mehr für das Bedienpersonal ausgehen. Erst wenn beispielsweise der Einfülltrichter 8 gemäß Pfeil D wieder auf den Einfülltrichter 1 zu bewegt wird und die beiden Teilplatten 3a, 3b wieder aneinander anliegen, ist die Einfüllöffnung 21 verschlossen und die beiden Signalgeberteile 73.1, 73.2 liegen erneut aneinander an, so daß ein Anschalten des Antriebes der Schnecke 20 erneut bewirkt werden kann.

Der Darstellung gemäß Fig. 3 ist darüber hinaus zu entnehmen, daß insbesondere bei sehr großen Einfülltrichtern 1 mit entsprechendem Fassungsvolumen und Gewicht die Verschiebebewegung des Einfülltrichters in der Gleitführung 5 mittels eines beispielsweise Hydraulikzylinders 11, der mit seiner Kolbenstange 11a an einer Seitenfläche 1a des Einfülltrichters 1 angreift, bewirkt werden kann. Der Hydraulikzylinder 11 ist dazu in nicht näher dargestellter Weise an der Plastifiziereinrichtung 2 befestigt.

Um dieses unter Umständen hohe Gewicht des Einfülltrichters 1 zuverlässig aufnehmen zu können, kann die Gleitführung 5 darüber hinaus auch an geeigneten Stellen, beispielsweise dem Getriebekasten 22a der Plastifiziereinrichtung 2 aufliegen und abgestützt werden.

Der Darstellung gemäß Fig. 3 ist darüber hinaus ein weiteres vorteilhaftes Merkmal der Vorrichtung zu entnehmen. So weist diese im Bereich der Grundplatte 51 der Gleitführung 5 in einem von dem Bereich der mit der Einfüllöffnung korrespondierenden Durchgangsöffnung 55 entfernten Bereich eine mit einem Schieber verschließbare Entleerungsöffnung 40 für den Einfülltrichter 1 auf, über die der Einfülltrichter entleert werden kann, wenn eine im Einfülltrichter 1 befindliche Menge an Rohmaterial nicht mehr in die Plastifiziereinrichtung 2 zugeführt werden soll. Dazu kann beispielsweise unterhalb der Entleerungsöffnung 40 ein Anschlußstutzen 41 für die Befestigung eines geeigneten Behältnisses, wie eines Sacks oder ähnlichem, vorgesehen sein.

Um eine Entleerung des Einfülltrichter 1 über die Entleerungsöffnung 40 nur dann zu ermöglichen, wenn sich der Einfülltrichter 1 mit seiner Auslaßöffnung 1b und der darunter befindlichen Durchgangsöffnung 35 in der Schieberplatte befindet, kann die Betätigung des hier nicht näher dargestellten Absperrschiebers an ein entsprechendes Signal des Signalgebers mit den Signalgeberteilen 71.1, 71.2 zwangsgekoppelt werden, die ansonsten zur Erfassung der Endposition der Schiebeplatte 3 mit den miteinander verbundenen Teilplatten 3a, 3b dient.

Zur weiteren Erhöhung der Sicherheit kann insbesondere bei Verwendung von hydraulischen oder ähnlichen Antriebsmittels für den Einfülltrichter 1 vorgesehen werden, daß bei einer Unterbrechung des Signals vom Signalgeber mit den Teilen 73.1, 73.2 und demzufolge einem Zugänglichwerden der Einfüllöffnung 21 der Einfülltrichter 1 in Pfeilrichtung C automatisch von dem Hydraulikzylinder 11 bis zum rechtsseitigen Anschlag 50 R verschoben wird, um Quetschgefahren an der zugänglichen Einfüllöffnung 21 durch den Einfülltrichter 1 und seine Teilplatte 3a zu verhindern.

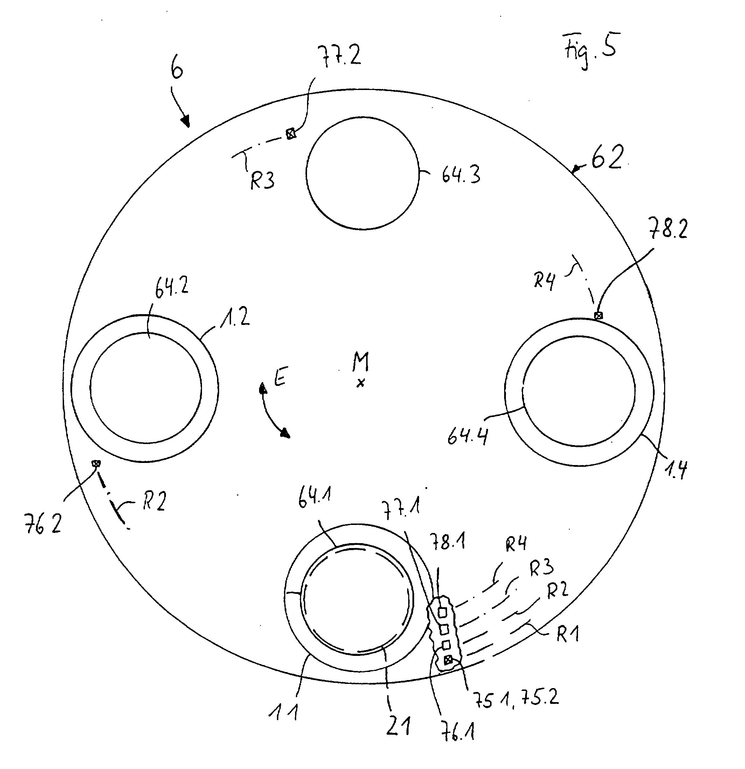

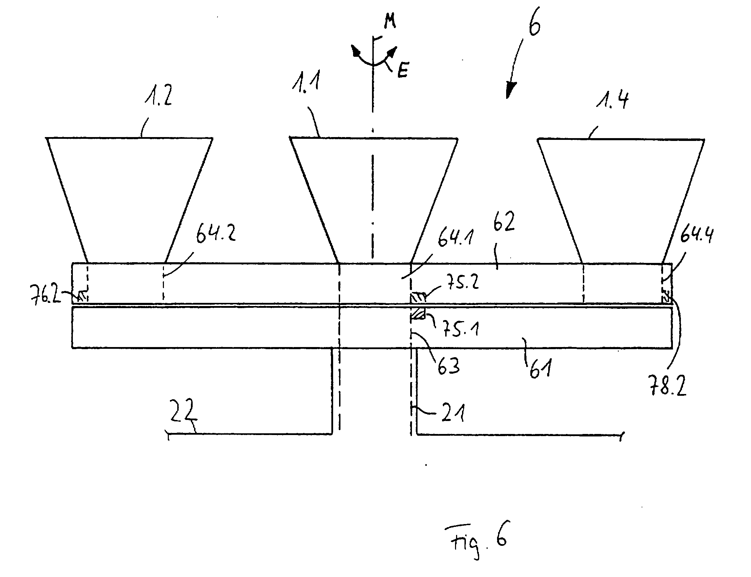

Eine weitere mögliche Ausgestaltungsform der Vorrichtung zum Zuführen von Rohmaterial ist in den Fig. 5 und 6 dargestellt. Bei der in diesen Figuren dargestellten Vorrichtung ist die Trichterführung als Revolverführung mit einer auf dem Gehäuse ortsfest angeordneten kreisförmigen Tragscheibe 61 und einer darüber befindlichen drehbar antreibbaren Revolverscheibe ausgebildet, die ebenfalls kreisförmig ist und den gleichen Außenumfang wie die Tragscheibe 61 aufweist.

Die Tragscheibe 61 weist eine mit der Einfüllöffnung 21 des Gehäuses 22 korrespondierende und außermittig ausgebildete Durchgangsöffnung 63 auf, während die drehbar um ihren Mittelpunkt M antreibbare Revolverscheibe 62 mehrere voneinander beabstandete Durchgangsöffnungen 64.1, 64.2, 64.3, 64.4 aufweist, die durch Drehung der Revolverscheibe in Pfeilrichtung E in eine mit der Einfüllöffnung 21 des Gehäuses und der Durchgangsöffnung 63 der Tragscheibe 61 korrespondierende Position bewegbar sind. Auf diesen Durchgangsöffnungen 64.1 bis 64.4 können Einfülltrichter 1.1, 1.2, 1.4 befestigt werden, die sodann durch Drehung der Revolverscheibe 62 in Pfeilrichtung E je nach Anforderung über der Einfüllöffnung 21 des Gehäuses 22 positionierbar sind. In der vorliegenden Darstellung gemäß den Fig. 5 und 6 befindet sich darüber hinaus über der Durchgangsöffnung 64.3 kein Einfülltrichter, so daß bei Drehung der Revolverscheibe 62 in eine Position, in der diese Durchgangsöffnung 64.3 über der Einfüllöffnung 21 positioniert wird, diese Einfüllöffnung 21 zur Reinigung von außen zugänglich ist.

Um die damit einhergehenden Gefahren für das Bedienungspersonal und auch Gefahren für die Plastifiziereinrichtung durch unexaktes oder falsches Positionieren von Einfülltrichtern zu vermeiden, kann nach einer möglichen Ausführung jeder Einfülltrichter 1.1, 1.2, 1.4 mit einem Signalgeber ausgerüstet sein, der die korrekte Positionierung über der Einfüllöffnung 21 bestimmen und durch entsprechende Signalabgabe einer Steuerung signalisieren kann, so daß nur bei über der Einfüllöffnung 21 befindlichem Einfülltrichter der Antrieb der Schnecke angeschaltet werden kann.

In den Fig. 5 und 6 ist eine davon abgewandelte Ausführungsform dargestellt, bei der jede Durchgangsöffnung 64.1 bis 64.4 mit einem Signalgeberteil 75.2 bis 78.2 ausgerüstet ist. Das Signalgeberteil 75.2, welches der Durchgangsöffnung 64.1 in der Revolverscheibe 62 zugeordnet ist, befindet sich dabei auf einem Radius R1 in bezug auf den Mittelpunkt M der Revolverscheibe 62, während die weiteren Signalgeberteile 76.2, 77.2, 78.2, die den Durchgangsöffnungen 64.2, 64.3 und 64.4 zugeordnet sind, auf jeweils kleiner werdenden Radien R2, R3, R4 auf der Revolverscheibe 62 angeordnet sind.

Entsprechend dieser Anordnung der Signalgeberteile 75.2, 76.2, 77.2, 78.2 sind auf der unterhalb der Revolverscheibe 62 ortsfest angebrachten Tragscheibe 61 entsprechend vier Signalgeberteile 75.1, 76.1, 77.1, 78.1 nebeneinander auf jeweils einem der Radien R1, R3, R3 und R4 angeordnet, so daß bei Drehung der Revolverscheibe 62 in eine Position, in der eine ihrer Durchgangsöffnungen 64.1, 64.2, 64.3, 64.4 mit der Durchgangsöffnung 63 in der Tragscheibe 61 und der darunter befindlichen Einfüllöffnung 21 des Gehäuses korrespondiert, das entsprechende Signalgeberteil 75.2, 76.2, 77.2, 78.2 auf der Revolverscheibe 62 mit dem entsprechenden Signalgeberteil 75.1, 76.1, 77.1, 78.1 entsprechend seiner Positionierung auf einem der Radien R1 bis R4 zusammenwirkt und die Abgabe eines entsprechenden Signals an die Steuereinheit der Vorrichtung bewirkt. Auf diese Weise kann nicht nur die korrekte Positionierung der Revolverscheibe 62 mit einer ihrer Durchgangsöffnungen 64.1 bis 64.4 über der Einfüllöffnung 21 des Gehäuses 22 angezeigt werden, sondern es ist auch eine exakte Zuordnung der gerade über der Einfüllöffnung 21 befindlichen Durchgangsöffnung 64.1 bis 64.4 der Revolverscheibe 62 mit dem zugehörigen Einfülltrichter 1.1, 1.2 oder 1.4 möglich.

Sofern, wie in den Zeichnungen dargestellt, eine Durchgangsöffnung 64.3 der Revolverscheibe 62 nicht mit einem Einfülltrichter besetzt wird, kann somit bei Abgabe des entsprechenden Signals, hier Signalgeber mit Signalgeberteilen 77.1, 77.2 der Antrieb der Schnecke schlagartig abgeschaltet werden, um Gefahren durch die offen zugängliche Einfüllöffnung 21 durch die Durchgangsöffnung 64.3 zu verhindern, während ansonsten bei Ausbleiben eines Signals von den Signalgebern 64.1, 64.2, 64.4 eine zeitlich verzögerte Abschaltung des Antriebes der Schnecke erfolgen kann.

Mit dieser als Revolverführung 6 ausgebildeten Trichterführung kann durch einfache Drehung der Revolverscheibe 62 in Pfeilrichtung E ein sehr schneller Wechsel des über der Einfüllöffnung 21 befindlichen Trichters 1.1, 1.2 oder 1.4 vorgenommen werden, wodurch Stillstandszeiten beispielsweise bei Farbwechsel oder Rohstoffwechsel weitgehend minimiert werden.

Die Revolverscheibe 62 kann selbstverständlich je nach Aufgabe und Größe auch mit mehr oder weniger Durchgangsöffnungen für Einfülltrichter versehen sein, wie es auch möglich ist, an einer von der Einfüllöffnung 21 und der mit dieser korrespondierenden Durchgangsöffnung 63 in der Tragscheibe 61 entfernt liegenden Bereich eine mit einem Schieber verschließbare Entleerungsöffnung zum Entleeren eines über die Entleerungsöffnung positionierten Einfülltrichters vorzusehen.

## Patentansprüche

1. Vorrichtung zum Zuführen von Rohmaterial in eine Plastifiziereinrichtung (2) mit einer in einem Gehäuse (22) mit Einfüllöffnung (21) drehbar antreibbaren Schnecke (20) von Spritzgieß- oder Extrusionsmaschinen, umfassend eine auf dem Gehäuse (22) befestigte und der Einfüllöffnung (21) zugeordnete Trichterführung für mindestens einen Einfülltrichter (1) mit Austrittsöffnung (16) für das Rohmaterial, wobei der mindestens eine Einfülltrichter (1) in eine mit der Einfüllöffnung (21) des Gehäuses (22) korrespondierende Position und eine hiervon entfernte Position bewegbar ist, **dadurch gekennzeichnet, daß** mindestens ein Signalgeber zur Bestimmung der Position des Einfülltrichters (1) in bezug auf die Einfüllöffnung (21) des Gehäuses (22) vorgesehen ist und der Antrieb der Schnecke (20) der Plastifiziereinrichtung (2) mittels eines von dem Signalgeber in Abhängigkeit von der Position des Einfülltrichters (1) abgegebenen Signals an- bzw. abschaltbar ist.

2. Vorrichtung nach Anspruch 1,
**dadurch gekennzeichnet, daß** die Trichterführung als Gleitführung (5) mit einer zu der Einfüllöffnung (21) des Gehäuses (22) korrespondierenden Durchgangsöffnung (55) ausgebildet ist und der Einfülltrichter (1) in der Gleitführung (5) verschiebbar geführt und die Position des Einfülltrichters (1) über der Durchgangsöffnung (55) der Gleitführung (5) mittels des Signalgebers erkennbar und erfaßbar ist.

3. Vorrichtung nach Anspruch 2,
**dadurch gekennzeichnet, daß** die Gleitführung (5) von einer am Gehäuse (22) befestigten Grundplatte (51) und an der Grundplatte (51) an einander gegenüberliegenden Seiten und parallel zueinander befestigten Seitenführungsschienen (52) gebildet ist und der Einfülltrichter (1) an seiner die Austrittsöffnung (1b) aufweisenden Seite mit einer Schiebeplatte (3) verbunden ist, die eine mit der Austrittsöffnung (1b) korrespondierende Durchgangsöffnung (35) aufweist, und wobei die Schiebeplatte (3) auf der Grundplatte (51) aufliegt und in der Gleitführung (5) verschiebbar geführt ist.

4. Vorrichtung nach einem der Ansprüche 1 bis 3,
**dadurch gekennzeichnet, daß** der Einfülltrichter (1) in der Gleitführung (5) dergestalt zwischen zwei Endpositionen verschiebbar ist, daß er sich in der einen Endposition über der Einfüllöffnung (21) des Gehäuses (22) befindet und in der anderen Endposition die Einfüllöffnung (21) vollständig freigibt und der Signalgeber der Endposition des Einfülltrichters (1) über der Einfüllöffnung (21) zugeordnet ist.

5. Vorrichtung nach Anspruch 4,
**dadurch gekennzeichnet, daß** ein weiterer Signalgeber zur Bestimmung der Position des Einfülltrichters (1) in einer die Einfüllöffnung (21) freigebenden Position vorgesehen ist.

6. Vorrichtung nach einem der Ansprüche 1 bis 3,
**dadurch gekennzeichnet, daß** zwei Einfülltrichter (1,8) vorgesehen und auf der Schiebeplatte (3) befestigt und in der Gleitführung (5) verschiebbar geführt sind, wobei die Schiebeplatte (3) je eine mit der jeweiligen Austrittsöffnung (1b bzw. 8b) der Einfülltrichter (1 bzw. 8) korrespondierende Durchgangsöffnung aufweist und jeder Einfülltrichter (1,8) mit einem Signalgeber zur Bestimmung seiner Position in bezug auf die Einfüllöffnung (21) des Gehäuses (22) ausgerüstet ist.

7. Vorrichtung nach einem der Ansprüche 1 bis 3,
**dadurch gekennzeichnet, daß** zwei Einfülltrichter (1,8) vorgesehen und auf der Schiebeplatte (3) befestigt und in der Gleitführung (5) verschiebbar geführt sind, wobei die Schiebeplatte (3) je eine mit der jeweiligen Austrittsöffnung (1b bzw. 8b) der Einfülltrichter (1 bzw. 8) korrespondierende Durchgangsöffnung aufweist und die Gleitführung (5) eine solche Länge (L) aufweist, daß die Schiebeplatte (3) aus einer Endposition, in der der erste Einfülltrichter (1) über der Einfüllöffnung (21) des Gehäuses (22) positionierbar ist, in eine zweite Endposition, in der der zweite Einfülltrichter (8) über der Einfüllöffnung (21) positionierbar ist, verschiebbar ist und jeder Endposition der Schiebeplatte (3) je ein Signalgeber zur Bestimmung der jeweiligen Endposition zugeordnet ist.

8. Vorrichtung nach einem der Ansprüche 6 oder 7,
**dadurch gekennzeichnet, daß** die Schiebeplatte (3) aus zwei lösbar miteinander verbindbaren Teilplatten (3a,3b) gebildet ist und jeder Einfülltrichter (1 bzw. 8) auf einer Teilplatte (3a bzw. 3b) der Schiebeplatte (3) befestigt ist und die Teilplatten (3a,3b) der Schiebeplatte (3) an ihren einander zugewandten Seiten mit einem Signalgeber ausgerüstet sind, dergestalt, daß eine aneinander anliegende Position der Teilplatten (3a,3b) mittels des Signalgebers erkennbar und erfaßbar ist.

9. Vorrichtung nach Anspruch 1,
**dadurch gekennzeichnet, daß** die Trichterführung als Revolverführung (6) mit einer auf dem Gehäuse ortsfest angeordneten Tragscheibe (61), die mit einer mit der Einfüllöffnung (21) des Gehäuses (22) korrespondierenden und außermittig in der Tragscheibe (61) ausgebildeten Durchgangsöffnung (63) ausgebildet ist, und einer auf der Tragscheibe (61) angeordneten und um ihren Mittelpunkt (M) drehbar antreibbaren Revolverscheibe (62) ausgebildet ist und die Revolverscheibe (62) mehrere voneinander beabstandete Durchgangsöffnungen (64.1, 64.2, 64.3, 64.4) aufweist, die durch Drehung der Revolverscheibe (62) in eine mit der Einfüllöffnung (21) des Gehäuses (22) und der Durchgangsöffnung (63) der Tragscheibe (61) korrespondierende Position bewegbar sind und über den Durchgangsöffnungen (64.1, 64.2, 64.3, 64.4) der Revolverscheibe (62) Einfülltrichter (1.1, 1.2, 1.4) befestigbar sind und jedem Einfülltrichter und/oder jeder Durchgangsöffnung (64.1, 64.2, 64.3, 64.4) ein Signalgeber zur Bestimmung seiner Position in bezug auf die Einfüllöffnung (21) des Gehäuses (22) zugeordnet ist.

10. Vorrichtung nach Anspruch 9,
**dadurch gekennzeichnet, daß** die Signalgeber so angeordnet sind, daß jeder jeweils einem Einfülltrichter und/oder jeder Durchgangsöffnung (64.1, 64.2, 64.3, 64.4) zugeordnete Signalgeber in einem unterschiedlichen radialen Abstand (R1, R2, R3, R4) vom Mittelpunkt (M) der Revolverscheibe (62) angeordnet ist, so daß bei Signalabgabe der jeweilige Einfülltrichter erkennbar ist.

11. Vorrichtung nach einem der Ansprüche 1 bis 10, **gekennzeichnet durch** eine Steuereinheit, mittels derer die von den Signalgebern in Abhängigkeit von der Position der Einfülltrichter und/oder Teilplatten (3a,3b) der Schiebeplatte (3) abgegebenen Signale logisch auswertbar sind, dergestalt, daß eine von der Position der Einfülltrichter in bezug auf die Einfüllöffnung (21) des Gehäuses (22) abhängige An- bzw. Abschaltung des Antriebes der Schnecke bewirkbar ist.

12. Vorrichtung nach Anspruch 11,
**dadurch gekennzeichnet, daß** mittels der Steuereinheit eine Erkennung des jeweils über der Einfüllöffnung (21) befindlichen Einfülltrichters bewirkbar ist.

13. Vorrichtung nach einem der Ansprüche 1 bis 12,
**dadurch gekennzeichnet, daß** die Trichterführung mit einem elektrischen, pneumatischen oder hydraulischen Antrieb zur Bewegung der Einfülltrichter ausgerüstet ist.

14. Vorrichtung nach einem der Ansprüche 1 bis 12,
**dadurch gekennzeichnet, daß** der Signalgeber als Endschalter, wie elektrischer Näherungsschalter, Lichtschranke, mechanischer Grenztaster, Magnetschalter, ausgebildet ist.

15. Vorrichtung nach einem der Ansprüche 1 bis 14,
**dadurch gekennzeichnet, daß** die Abschaltung des Antriebes der Schnecke (20) schlagartig durchführbar ist.

16. Vorrichtung nach einem der Ansprüche 1 bis 14,
**dadurch gekennzeichnet, daß** die Abschaltung des Antriebes der Schnecke (20) zeitverzögert durchführbar ist.

17. Vorrichtung nach einem der Ansprüche 1 bis 16,
**dadurch gekennzeichnet, daß** die Grundplatte (51) oder Tragscheibe (61) der Trichterführung in einem von dem Bereich der mit der Einfüllöffnung (21) korrespondierenden Durchgangsöffnung (55 bzw. 63) entfernten Bereich eine mit einem Schieber verschließbare Entleerungsöffnung (40) für einen Einfülltrichter (1) aufweist und der Einfülltrichter (1) in eine mit der Entleerungsöffnung (40) korrespondierende Position bewegbar ist.

## Claims

1. A device for feeding raw material into a plasticating unit (2) with a screw (20) which can be rotatably driven in a housing (22) with a filling opening (21) of injection-moulding machines or extruders, comprising a hopper guide fastened on the housing (22) and assigned to the filling opening (21) for at least one filling hopper (1) with an outlet opening (16) for the raw material, the at least one filling hopper (1) being able to be moved into a position corresponding to the filling opening (21) of the housing (22) and a position away from that, **characterized in that** at least one signal transmitter is provided for determining the position of the filling hopper (1) with respect to the filling opening (21) of the housing (22), and the drive of the screw (20) of the plasticating unit (2) can be switched on and off by means of a signal emitted by the signal transmitter in dependence on the position of the filling hopper (1).

2. A device according to claim 1, **characterized in that** the hopper guide is designed as a sliding guide (5) with a through-opening (55) corresponding to the filling opening (21) of the housing (22) and the filling hopper (1) is guided displaceably in the sliding guide (5), and the position of the filling hopper (1) over the through-opening (55) of the sliding guide (5) can be detected and registered by means of the signal transmitter.

3. A device according to claim 2, **characterized in that** the sliding guide (5) is formed by a base plate (51) fastened to the housing (22) and by side guiding rails (52) fastened to the base plate (51) on mutually opposite sides and parallel to each other, and the filling hopper (1) is connected on its side having the outlet opening (1b) to a sliding plate (3), which has a through-opening (35) corresponding to the outlet opening (1b), and the sliding plate (3) resting on the base plate (51) and being displaceably guided in the sliding guide (5).

4. A device according to any one of claims 1 to 3, **characterized in that** the filling hopper (1) is displaceable in the sliding guide (5) in such a way between two end positions that, in the one end position, it is located over the filling opening (21) of the housing (22) and, in the other end position, completely exposes the filling opening (21), and the signal transmitter is assigned to the end position of the filling hopper (1) over the filling opening (21).

5. A device according to claim 4, **characterized in that** a further signal transmitter is provided for determining the position of the filling hopper (1) in a position exposing the filling opening (21).

6. A device according to any one of claims 1 to 3, **characterized in that** two filling hoppers (1, 8) are provided and fastened on the sliding plate (3) and are guided displaceably in the sliding guide (5), the sliding plate (3) having for each outlet opening (1b and 8b) of the filling hoppers (1 and 8) a corresponding through-opening and each filling hopper (1, 8) being equipped with a signal transmitter for determining its position with respect to the filling opening (21) of the housing (22).

7. A device according to any one of claims 1 to 3, **characterized in that** two filling hoppers (1, 8) are provided and fastened on the sliding plate (3) and are guided displaceably in the sliding guide (5), the sliding plate (3) having for each outlet opening (1b and 8b) of the filling hoppers (1 and 8) a corresponding through-opening and the sliding guide (5) being of such a length (L) that the sliding plate (3) can be displaced from one end position, in which the first filling hopper (1) can be positioned over the filling opening (21) of the housing (22), into a second end position, in which the second filling hopper (8) can be positioned over the filling opening (21), and each end position of the sliding plate (3) is respectively assigned a signal transmitter for determining the respective end position.

8. A device according to either of claims 6 and 7, **characterized in that** the sliding plate (3) is formed by two subplates (3a, 3b) which can be releasably connected to each other and each filling hopper (1 and 8) is fastened on one subplate (3a and 3b) of the sliding plate (3) and the subplates (3a, 3b) of the sliding plate (3) are equipped on their mutually facing sides with a signal transmitter in such a way that a position of the subplates (3a, 3b) lying against each other can be detected and registered by means of the signal transmitter.

9. A device according to claim 1, **characterized in that** the hopper guide is designed as a turret guide (6) with a carrying plate (61), which is fixedly arranged on the housing and designed with a through-opening (63) corresponding to the filling opening (21) of the housing (22) and formed off-centre in the carrying plate (61), and a turret plate (62), which is arranged on the carrying plate (61) and can be driven rotatably about its centre point (M), and the turret plate (62) has a plurality of spaced-apart through-openings (64.1, 64.2, 64.3, 64.4), which are able to be moved by rotation of the turret plate (62) into a position corresponding to the filling opening (21) of the housing (22) and the through-opening (63) of the carrying plate (61), and over the through-openings (64.1, 64.2, 64.3, 64.4) of the turret plate (62) filling hoppers (1.1, 1.2, 1.4) can be fastened, and each filling hopper and/or each through-opening (64.1, 64.2, 64.3, 64.4) is assigned a signal transmitter for determining its position with respect to the filling opening (21) of the housing (22).

10. A device according to claim 9, **characterized in that** the signal transmitters are arranged in such a way that each signal transmitter respectively assigned to a filling hopper and/or each through-opening (64.1, 64.2, 64.3, 64.4) is arranged at a different radial distance (R1, R2, R3, R4) from the centre point (M) of the turret plate (62), so that, when a signal is emitted, the respective filling hopper can be detected.

11. A device according to any one of claims 1 to 10, **characterized by** a control unit, by means of which the signals emitted by the signal transmitters in dependence on the position of the filling hoppers and/or subplates (3a, 3b) of the sliding plate (3) can be logically evaluated in such a way that switching on or off of the drive of the screw can be made dependent on the position of the filling hoppers with respect to the filling opening (21) of the housing (22).

12. A device according to claim 11, **characterized in that** a detection of that filling hopper respectively located over the filling opening (21) can be brought about by means of the control unit.

13. A device according to any one of claims 1 to 12,
**characterized in that** the hopper guide is equipped with an electric, pneumatic or hydraulic drive for the movement of the filling hoppers.

14. A device according to any one of claims 1 to 12, **characterized in that** the signal transmitter is designed as a limit switch, such as an electrical proximity switch, light barrier, mechanical limit switch or solenoid switch.

15. A device according to any one of claims 1 to 14, **characterized in that** the switching off of the drive of the screw (20) can be carried out abruptly.

16. A device according to any one of claims 1 to 14, **characterized in that** the switching off of the drive of the screw (20) can be carried out with a time delay.

17. A device according to any one of claims 1 to 16, **characterized in that** the base plate (51) or carrying plate (61) of the hopper guide has in a region away from the region of the through-opening (55 or 63) corresponding to the filling opening (21) an emptying opening (40) for a filling hopper (1), which opening can be closed by a slide, and the filling hopper (1) can be moved into a position corresponding to the emptying opening (40).

## Revendications

1. Dispositif d'alimentation en matière première dans un dispositif de plastification (2), comportant une vis (20) entraînée en rotation à l'intérieur d'un carter (22) pourvu d'une ouverture de remplissage (21), de machines de moulage par injection ou d'extrudeuses, comprenant un moyen de guidage fixé au carter (22) et associé à l'ouverture de remplissage (21) pour au moins une trémie de remplissage (1) pourvue d'une ouverture de sortie (16) pour la matière première, la trémie de remplissage (1), au nombre d'au moins une, pouvant être déplacée d'une position dans laquelle elle coïncide avec l'ouverture de remplissage (21) du carter (22) dans une position éloignée de celle-ci, **caractérisé en ce qu'**il est prévu au moins un détecteur pour déterminer la position de la trémie de remplissage (1) par rapport à l'ouverture de remplissage (21) du carter (22) et que l'entraînement de la vis (20) du dispositif de plastification (2) peut être mis en marche ou coupé à l'aide d'un signal délivré par le détecteur en fonction de la position de la trémie de remplissage (1).

2. Dispositif selon la revendication 1, **caractérisé en ce que** le moyen de guidage de la trémie est conformé en guidage à glissière (5) avec une ouverture de passage (55) qui correspond à l'ouverture de remplissage (21) du carter (22), que la trémie de remplissage (1) est guidée de manière coulissante dans la glissière (5) et que le positionnement de la trémie de remplissage (1) au-dessus de l'ouverture de remplissage (21) peut être détecté et déterminé au moyen du détecteur.

3. Dispositif selon la revendication 2, **caractérisé en ce que** la glissière (5) est formée d'une plaque de base (51) fixée au carter (22) et de rails de guidage (52) latéraux, mutuellement parallèles, fixés à la plaque de base (51), sur des côtés en vis-à-vis, que la trémie de remplissage (1), du côté portant l'ouverture de sortie (16), est liée à une plaque coulissante (3) qui est pourvue d'une ouverture de passage (35) communiquant avec l'ouverture de sortie (1b), la plaque coulissante (3) reposant sur la plaque de base (51) et étant guidée coulissante dans la glissière (5).

4. Dispositif selon une des revendications 1 à 3, **caractérisé en ce que** la trémie de remplissage (1) peut coulisser dans la glissière (5) entre deux positions extrêmes de manière telle, que dans une position extrême elle soit située au-dessus de l'ouverture de remplissage (21) du carter (22) et, dans l'autre position extrême, elle libère entièrement l'ouverture de remplissage (21), et que le détecteur est associé à la position extrême de la trémie de remplissage (1) au-dessus de l'ouverture de remplissage (21).

5. Dispositif selon la revendication 4, **caractérisé en ce qu'**il est prévu un détecteur supplémentaire pour déterminer le positionnement de la trémie de remplissage (1) dans une position dégageant l'ouverture de remplissage (21).

6. Dispositif selon une des revendications 1 à 3, **caractérisé en ce qu'**il est prévu deux trémies de remplissage (1, 8) qui sont fixées à la plaque coulissante (3) et sont guidées avec possibilité de coulissement dans la glissière (5), la plaque coulissante comportant une ouverture de passage associée à chacune des ouvertures de sortie (1b, 8b) respectivement des trémies de remplissage (1 et 8) et que chaque trémie de remplissage (1,8) est équipée d'un détecteur pour déterminer sa position par rapport à l'ouverture de remplissage (21) du carter (22).

7. Dispositif selon une des revendications 1 à 3, **caractérisé en ce qu'**il est prévu deux trémies de remplissage (1, 8) qui sont fixées à la plaque coulissante (3) et sont guidées avec possibilité de coulissement dans la glissière (5), la plaque coulissante
(3) comportant une ouverture de passage associée à chacune des ouvertures de sortie (1b, 8b) respectives des trémies de remplissage (1 et 8 ) et la glissière (5) ayant une longueur (L) telle que la plaque coulissante puisse être amenée par coulissement d'une première position extrême, dans laquelle la première trémie de remplissage (1) est positionnée au-dessus de l'ouverture de remplissage (21), dans une deuxième position extrême, dans laquelle la deuxième trémie de remplissage
(8) est positionnée au-dessus de l'ouverture de remplissage (21), et qu'à chaque position extrême de la plaque coulissante (3) est associé un détecteur pour déterminer la position extrême concernée.

8. Dispositif selon une des revendications 6 ou 7, **caractérisé en ce que** la plaque coulissante (3) est formée de deux parties de plaque (3a, 3b) liées l'une à l'autre de manière séparable et que chaque trémie de remplissage (1, 8) est fixée à une partie (3a, 3b) de la plaque coulissante (3) et que les parties (3a, 3b) de la plaque coulissante (3), sur leurs côtés en vis-à-vis, sont équipées d'un détecteur de telle sorte qu'un positionnement l'une contre l'autre des parties de plaque (3a, 3b) peut être détecté et déterminé à l'aide du détecteur.

9. Dispositif selon la revendication 1, **caractérisé en ce que** le moyen de guidage de la trémie est agencé en glissière revolver (6) avec une plaque-support (61) fixée de manière stationnaire au carter, qui est pourvue d'une ouverture de passage (63) excentrée, communiquant avec l'ouverture de remplissage (21) du carter (22), et avec une plaque revolver (62) montée sur la plaque-support (61) et entraînée en rotation autour du centre (M) de celle-ci, en ce que la plaque revolver (62) comporte plusieurs ouvertures de passage (64.1, 64.2, 64.3, 64.4) mutuellement espacées qui peuvent être amenées par rotation de la plaque revolver (62), dans une position dans laquelle elles communiquent avec l'ouverture de remplissage (21) du carter (22) et l'ouverture de passage (63) de la plaque-support (61), en ce que des trémies de remplissage (1.1, 1.2, 1.4) sont fixées au-dessus des ouvertures de passage (64.1, 64.2, 64.3, 64.4) de la plaque revolver (62) et en ce qu'un détecteur est associé à chaque trémie de remplissage ou chaque ouverture de passage (64.1, 64.2, 64.3, 64.4) aux fins de déterminer sa position par rapport à l'ouverture de remplissage (21) du carter (22).

10. Dispositif selon la revendication 9, **caractérisé en ce que** les détecteurs sont disposés de manière telle, que chaque détecteur associé chaque fois à une trémie de remplissage et/ou une ouverture de passage (64.1, 64.2, 64.3, 64.4) soit situé à une distance radiale (R1, R2, R3, R4) différente du centre (M) de la plaque revolver (62), de manière à pouvoir détecter la trémie de remplissage concernée lors de la délivrance d'un signal.

11. Dispositif selon une des revendications 1 à 10, **caractérisé par** une unité de commande, au moyen de laquelle les signaux délivrés par les détecteurs en fonction de la position des trémies de remplissage et/ou des parties de plaque (3a, 3b) de la plaque coulissante (3) sont exploités par des voies logiques afin que l'entraînement de la vis (20) puisse être mis en marche ou coupé en fonction de la position de la trémie de remplissage par rapport à l'ouverture de remplissage (21) du carter (22).

12. Dispositif selon la revendication 11, **caractérisé en ce qu'**il est possible, à l'aide de l'unité de commande, de détecter la trémie de remplissage qui est positionnée chaque fois au-dessus de l'ouverture de remplissage (21).

13. Dispositif selon une des revendications 1 à 12, **caractérisé en ce que** le moyen de guidage de la trémie est équipé d'un entraînement électrique, pneumatique ou hydraulique pour déplacer la trémie de remplissage.

14. Dispositif selon une des revendications 1 à 12, **caractérisé en ce que** le détecteur est conformé en contacteur de fin de course, comme par exemple un contact de proximité, un barrage photo-électrique, un déclencheur mécanique, un contacteur magnétique.

15. Dispositif selon une des revendications 1 à 14, **caractérisé en ce que** la coupure de l'entraînement de la vis (20) a lieu brutalement.

16. Dispositif selon une des revendications 1 à 14, **caractérisé en ce que** la coupure de l'entraînement de la vis (20) a lieu avec une temporisation

17. Dispositif selon une des revendications 1 à 16, **caractérisé en ce que** la plaque de base (51) ou la plaque-support (61) du moyen de guidage de la trémie, dans une zone éloignée de la zone comportant l'ouverture de passage (55, 63) communiquant avec l'ouverture de remplissage (21), comporte une ouverture de vidange (40) fermée par un tiroir pour une trémie de remplissage (1) et que la trémie de remplissage (1) peut être déplacée dans une position de communication avec l'ouverture de vidange (40).
